# EUROPEAN PATENT SPECIFICATION

(11) **EP 0 643 434 B1**
(45) Date of publication and mention of the grant of the patent: **20.10.1999**
(21) Application number: 94907069.2
(22) Date of filing: 18.02.1994
(51) Int. Cl.: H01M 10/40, H01M 6/18, H01M 4/02

(54) **METHOD OF CELL MANUFACTURE**
VERFAHREN ZUR HERSTELLUNG EINER ZELLE
PROCEDE DE FABRICATION D'UNE CELLULE

(30) Priority: 23.02.1993 JP 5963193; 25.02.1993 JP 6299493; 08.03.1993 JP 7526293; 08.03.1993 JP 7526393
(43) Date of publication of application: 15.03.1995
(73) Proprietor: YUASA CORPORATION, Takatsuki-shi, Osaka 569 (JP)
(72) Inventor: TAKEDA, Kazunari, Takatsuki-shi, Osaka 569 (JP); IZUCHI, Syuichi, Takatsuki-shi, Osaka 569 (JP)
(74) Representative: Stoner, Gerard Patrick
(86) International application number: PCT/JP94/00246
(87) International publication number: WO 94/19840

(56) References cited:
- GB-A- 2 164 047
- JP-A- 1 107 471
- JP-A- 2 040 867
- JP-B- 4 060 304
- US-A- 5 187 032
- US-A- 5 279 910
- PATENT ABSTRACTS OF JAPAN vol. 016, no. 215 (E-1204), 20 May 1992 & JP-A-04 036959 (DAI ICHI KOGYO SEIYAKU CO LTD;OTHERS: 01), 6 February 1992,

## Description

This invention relates to batteries which operate reversibly at environmental temperature, and to specifically methods for manufacturing them.

### Background Art

With the recent tendency to design electric equipment into micro-electronic form, batteries have been housed in electric equipment and integrated with electronics elements and their circuits, e.g. power sources for memory back-up of various electric equipment. For this reason, the demand for minimizing the size, weight and thickness of batteries and for large energy density is increasing. In the primary battery field, small and light-weight batteries such as lithium batteries are already used, but their field of application is limited. In the field of secondary batteries, batteries utilizing nonaqueous electrolyte, which can be made smaller in size and weight, attract current attention as an alternative to conventional lead and nickel-cadmium batteries. However with nonaqueous electrolyte, electrode active materials which can satisfy practical physical properties such as cycle characteristic and self-discharge characteristic have not been found yet.

In order to obtain a small and light battery having a large energy density and a high reliability, it is necessary to examine:
(1) Problem of electrode active material and electrode
(2) Problem of electrolyte

As for the problem (1), the inventor examined a film type battery, that is, a battery having unit cells with thicknesses of 100 to 500 µm and also called a "sheet-shaped" battery. Manufacture of metallic lithium foil having a desirable performance was technically difficult, so the battery manufacturing process became complicated. Further, with secondary batteries formation of lithium dendrite and passivation of the interface took place so that the use of metallic lithium was restricted. Therefore, investigations on lithium alloys such as lithium-aluminium, lithium-lead and lithium-tin are being carried on actively. However, these electrode cracked or broke into fine pieces with repeated charging and discharging, so that the cycle characteristic was not improved because these alloys e.g. Li-Al have small strengths. As an alternative for restricting the formation of lithium dendrite, investigations on selection of electrolyte salts and improvements in the separator are being made. For the separator, it has been attempted to restrict the formation of lithium dendrite by laminating non-woven fabrics made of polypropylene and non-woven fabrics made of glass fiber. However, a substantial solution has not been found yet.

Accordingly, electrode active materials utilizing intercalation or doping phenomenon of layer compound are under investigation. These material are expected to have excellent charge/discharge cycle characteristics, because theoretically complicated chemical reactions do not occur in the electrochemical reaction when charging and discharging. Use of carbon material as the electrode active material is one such proposed solution to problems of cycle characteristic and self-discharge characteristic of the electrode active material. Features of this carbon material are high doping capacity, low self-discharge rate and an excellent cycle characteristic. A feature of special note is that it has a base-potential extremely near to that of metallic lithium.

On the other hand electrolytes involve the following difficulties. Liquid electrolytes prepared by dissolving ionic compound in organic electrolyte have been used for batteries and other electrochemical devices such as electric double-layer capacitors and electrochromic elements. However there have been difficulties, e.g. leakage of electrolyte from the battery and ease of elution and evaporation of electrode material. Problems of long-term reliability and scattering of electrolyte in a sealing process have remained unsolved. To improve solution-leakage resistance and long-term reliability, ion-conductive high-molecular compounds having large ionic conductivity have been reported and studied.

Ion-conductive high-molecular compounds being studied now are straight-chain, network-crosslinked or comb-shaped homopolymers and copolymers including ethylene oxide as a basic unit. Crystallization is avoided by making the compound into network-crosslinked or comb-shaped polymer forms, to increase ionic conductivity at low temperature. In particular, ion-conductive high-molecular compounds using the network crosslink polymer have large mechanical strength and are excellent in ionic conductivity at low temperature.

Electrochemical cells using ion-conductive high-molecular compounds are described widely: see e.g. US-A-4,303,748, US-A-4,589,197 and US-A-4,547,440. These cells use ion-conductive high-molecular compound prepared by dissolving ionic compound into high-molecular compounds having a polyether structure.

In order to use an ion-conductive high-molecular compound as an electrolyte, it is required for the high-molecular compound to have both high ionic conductivity and high mechanical properties (mechanical strength, flexibility etc.). However these properties contradict each other. In the prior art documents described above, for example, the compound is operated principally at high temperature because the ionic conductivity below room temperature is inadequate. Addressing this, JP-A-59/149601, JP-A-58/75779 and US-A-4,792,504 propose that an organic solvent (preferably an organic solvent with high permittivity) is added to the ion-conductive high-molecular compound to keep a solid state. In this method the ionic conductivity is indeed improves but the mechanical strength is much worse. Having in mind that, in electrode active materials utilizing intercalation or doping phenomenon of layer compounds, expansion and contraction of the electrode active material accompany charging and discharging, it is clearly required to maintain or improve mechanical strength of the electrode and electrolyte.

When an ion-conductive high-molecular compound is used it is necessary to make the electrolyte in a film shape to reduce internal resistance. This is especially important for a film-type battery. Ion-conductive high-molecular compounds are generally easy to work as uniform film into a desired shape, and various methods for this are known, for example:
a method in which a solution of the ion-conductive high-molecular compound is cast and the solvent evaporated and removed;
a method in which polymeric monomer or macromer is applied on a substrate to be heated and polymerized, and
a method in which curing is done by means of irradiation by activated ray.

It is possible to obtain uniform film with these methods. However fine short-circuiting sometimes occurs owing to breakage of the electrolyte layer, caused by its compression deformation when actually laminating the ion-conductive high-molecular compound between the electrodes to assemble the device. Accordingly, in order to make the ion-conductive high-molecular compound into uniform film, good mechanical strength is important as well as ionic conductivity.

We find that problems arise when an ion-conductive high-molecular compound is used.

These problems were shown to be attributable to phenomena described below, because materials used when manufacturing the ion-conductive high-molecular compound remained in it. A high-molecular compound having a reactive double-bond and polyether structure, polymerized so as to have a crosslink network structure, is used. This high-molecular compound - known for the present purposes e.g. from our JP-A-5/041247 - is generally prepared by esterification reaction using polyethylene glycol, acrylic acid or methacrylic acid, sulphuric acid or para-toluenesulphonic acid, and organic solvent; the prepared material is neutralized using alkali metal hydroxide and then washed using aqueous alkali metal chloride.

When substantial acrylic acid or methacrylic acid monomer remains in the high-molecular compound, qualitative stability of the high-molecular compound lowers and this compound is polymerized freely before manufacturing the ion-conducive high-molecular compound. Yield, qualitative stability and uniformity of the ion-conductive high-molecular compound are then reduced. When films comprising such an ion-conductive high-molecular compound are used and laminated between the electrodes, the films break on compression deformation, causing fine short-circuiting when assembling the batteries, electrochromic elements and other such devices.

This invention is made in consideration of the above mentioned problems.

The invention provides a method of making a battery containing a cathode composite and an electrolyte, each comprising an ion-conductive high-molecular compound, and an anode which may also by a composite comprising the ion-conductive high-molecular compound;
comprising the steps of
(a) preparing one or more high-molecular compounds selected from those of the following formulae (I) and (II), including at least one of formula (II) : 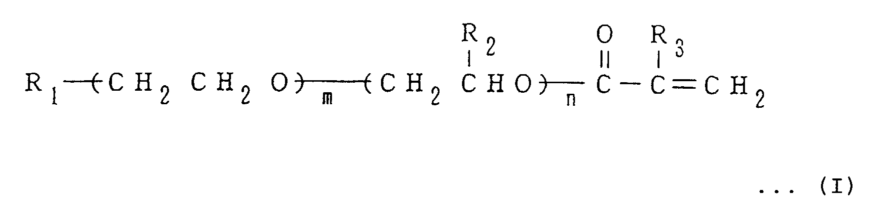 wherein R₁, R₂, R₃ are hydrogen or lower alkyl having a carbon number of 1 or more and m and n are integers according with m ≥ 1, n ≥ 0 and n/m is in the range 0 to 5; 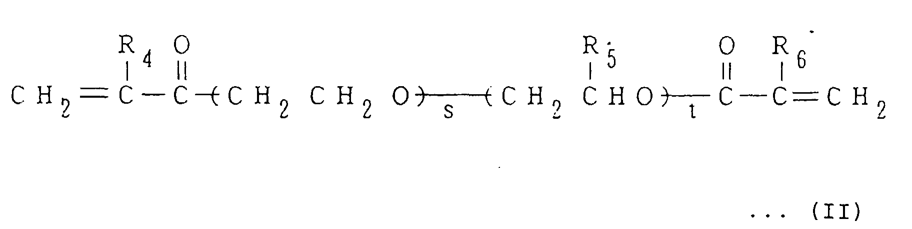 wherein R₄, R₅ and R₆ are hydrogen or lower alkyl having a carbon number of 1 or more and s and t are integers according with s ≥ 3, t ≥ 0, and t/s is in the range 0 to 5;
   by esterifying the corresponding (poly)alkylene glycol with the appropriate acrylic acid in organic solvent in the presence of sulphuric acid or para-toluenesulphonic acid, the product being neutralised with alkali metal hydroxide and then washed using aqueous alkali metal chloride; and
(b) polymerising the one or more high molecular compounds to form a crosslinked network in the presence of at least one ionic compound for conferring conduction;
characterised in that a radical scavenger to inhibit premature reaction, selected from compounds of formulae (III), (IV), (V) and (VI) below, is present at step (a) above.

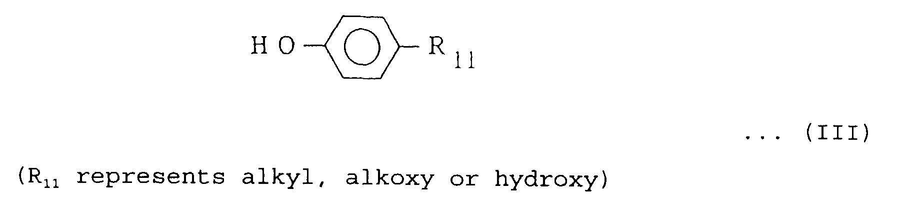

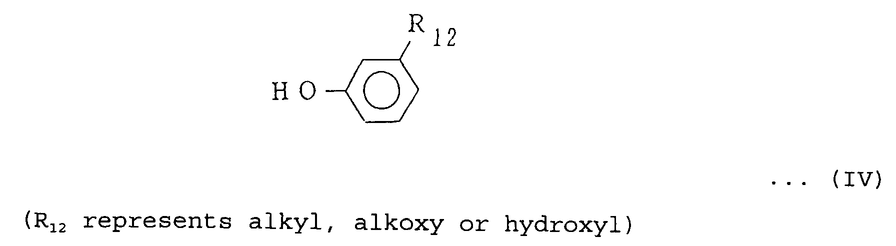

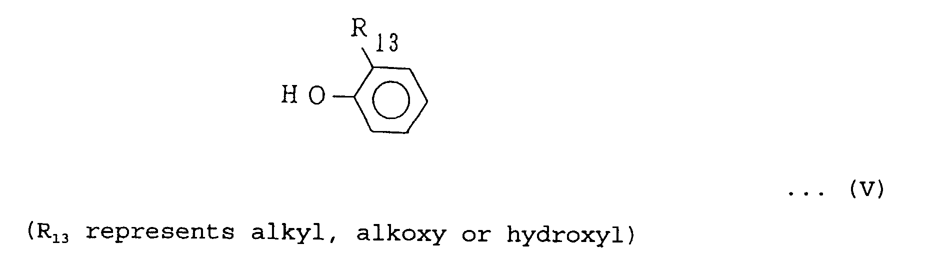

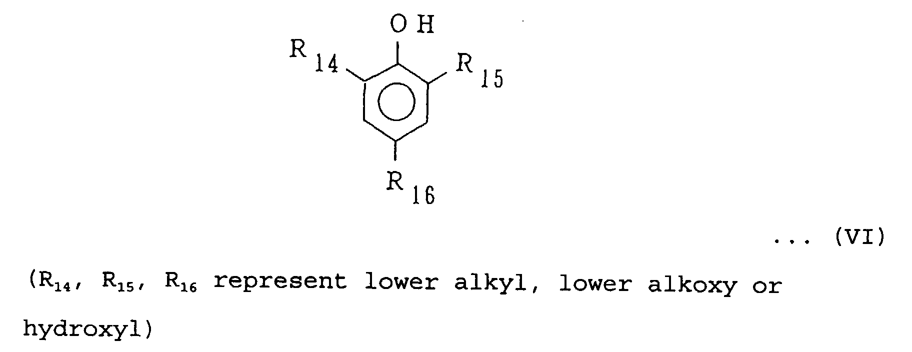

Various preferred features are set out in the subclaims.

Since the ion-conductive high-molecular compound is a cross-linked polymer formed by ether bond, it does not include intermolecular hydrogen bond and becomes a structure with low glass transition temperature. For this reason, migration of dissolved ionic compound becomes extremely easy in such an ion-conductive high-molcular compound. The formula (I) typically represent monoacrylate or monomethacrylate of polyethylene glycol, and the formula (II) typically represents diacrylate or dimethacrylate of polyethylene glycol.

At least the cathode composite or anode composite may include a binder. Thereby, mechanical strengths of the cathode composite and anode composite are improved remarkably.

The radical scavenger functions as a stabilizer for the high-molecular compound. Namely, when the radical scavenger is not included, the high-molecular compound polymerized freely before preparing the ion-conductive high-molecular compound by polymerization. This degree of polymerization is smaller than a degree of polymerization of the ion-conductive high-molecular compound prepared by polymerization. Therefore, a quality of the prepared ion-conductive high-molecular compound becomes unstable, so that an intended quality becomes not obtainable. Since the radical scavenger is previously included in the high-molecular compound in this invention, the free polymerization of the high-molecular compound can be restricted and the quality of the prepared ion-conductive high-molecular compound, i.e. the quality of the battery, can be made stable.

It is preferable to control the content of the radical scavenger in the battery content to 0.1 wt% or smaller. The reason is that the hydroxyl group included in the radical scavenger has a bad influence on battery characteristics, especially on characteristics after long-term preservation, and a battery with low long-term reliability would be produced if the content of radical scavenger is larger than 0.1 wt%.

As the ionic compound; inorganic ionic salts including one kind of Li, Na or K such as LiClO₄ LiBF₄, LiAsF₆, LiPF₆, LiI, LiBr, Li₂B₁₀Cl₁₀, LiCF₃SO₃, LiCF₃CO₂, LiSCN, NaI, NaSCN, NaBr, NaClO₄ and KSCN; quaternary ammonium salts such as (CH₃)₄NBF₄, (CH₃)₄NBr, (C₂H₅)₄NClO₄, (C₂H₅)₄NI, (C₃H₇)₄NBr, (n-C₄H₉)₄NClO₄, (n-C₄H₉)₄NI, (C₂H₅)₄N-maleate, (C₂H₅)₄N-benzoate and (C₂H₅)₄N-phthalate and organic ionic salts such as lithium stearyl sulfonate, sodium octyl sulfonate and lithium dodecylbenzene sulfonate may be mentioned. These ionic compounds may be used as a combination of two of more kinds.

Concerning the mixing ratio of these ionic compounds, a ratio of the ionic compound to the foregoing high-molecular compound of 0.0001 to 5.0 mol/ℓ, especially a ratio of 0.005 to 2.0 mol/ℓ, is preferable. When the quantity of ionic compound is excessively large, the excessive ionic compound i.e. inorganic ionic salt for example, does not dissociate but is only present as a mixture, causing a decrease of ionic conductivity. The proper mixing ratio of the ionic compound differs depending on the electrode active material. For example, a ratio around the value offering the maximum ion conductivity of the electrolyte is preferable for a battery utilizing the intercalation of layer compound. For a battery using electro-conductive polymer utilizing a doping phenomenon as the electrode active material, the ration should be set so as to correspond to the change of ion concentration in the electrolyte caused by charging and discharging.

There is no special limitation in the inclusion method for the ionic compound. A method may be mentioned, for example, in which the ionic compound is dissolved in organic solvent, such as methylethylketone or tetrahydrofuran, and mixed uniformly with the foregoing high-molecular compound, the organic solvent then being removed under vacuum-reduced pressure.

An organic compound which can dissolve the ionic compound may be included in the foregoing ion-conductive high-molecular compound. By doing so, the ionic conductivity can be improved markedly without changing the basic skeleton of ion-conductive high-molecular compound.

Suitable organic compounds which can dissolve the ionic compound include for example cyclic carbonic ester such as propylene carbonate and ethylene carbonate, cyclic esters such as γ-butyrolactone, ethers such as tetrahydrofuran or its derivative, 1, 3-dioxane, 1,2-dimethoxyethane and methyldiglyme, nitriles such as acetonitrile and benzonitrile, dioxorane or its derivative; and sulfolane or its derivative.

These compounds may be used independently or as a combination of two or more kinds. The kind of material is not limited to these. Mixing ratio and mixing method can be chosen freely.

A binder may be included as a composition material in at least one of the cathode composite and the anode composite. By doing so, mechanical strengths of the cathode composite and anode composite are improved remarkably.

As the binder, polymer of high-molecular weight ethylene oxide and random copolymer of high-molecular weight ethylene oxide-propylene oxide are suitable examples. It is preferable that the composition ratio (the mole ratio) of ethylene oxide unit (EO) and propylene oxide unit (PO) in the random copolymer of high molecular weight ethylene oxide-propylene oxide satisfies 0 < (PO) / (EO) ≤ 5, but this is not essential.

The binder is prepared by dissolving or dispersing an organic compound, which will be described later, in a solvent such as dimethylformamide or xylene. As the organic compound, polymer or copolymer of the following compounds may be mentioned: acrylonitrile, methacrylonitrile, vinylidene fluoride, vinyl fluoride, chloroprene, vinyl pyridine or its derivative, vinylidene chloride, ethylene, propylene, cyclic diene.

Suitable cyclic dienes include e.g. cyclopentadiene, 1,3-cyclohexadiene.

For including the binder in the cathode composite and anode composite the following methods are generally suitable. The foregoing organic compound is dissolved in solvent, the electrode active material and ion-conductive high-molecular compound etc. are dispersed in it, and the prepared solution is used as an application liquid. Or, the electrode active material and ion-conductive high-molecular compound etc. are dispersed in a dispersant liquid comprising the foregoing organic compound and a dispersant for dispersing the organic compound, and the prepared solution is used as an application liquid.

Carbon material may be used as the negative active material for the anode composite. The carbon material has a high doping capacity, a low self-discharge rate, an excellent cycle characteristic, and a base-potential extremely near to that of metallic lithium. It does not produce a complicated chemical reaction theoretically at time of the electrochemical reaction during charging and discharging. Consequently, an excellent charge/discharge cycle characteristic can be obtained when the carbon material is used as the negative active material for the anode composite. In addition, the anode composite becomes extremely stable from physical and electrochemical points of view.

As the negative active material; alloys including lithium metals such as lithium aluminium, lithium lead, lithium-tin, lithium-aluminium-tin, lithium gallium and Wood's alloys, lithium metals and carbon material may be mentioned. These materials may be used as a combination of two or more kinds.

As the carbon material; it is preferable to use materials having X-ray diffraction properties as listed in Table 1, e.g. carbon powder prepared by burning anisotropic pitch at a temperature of 2,000°C or more (average grain size: 15 µm or smaller), and carbon fiber.

**[Table 1]**

| | |
|---|---|
| Lattice spacing (d002) | 3.35∼3.40 Å |
| Size of crystalline in a-axis direction | La: 200 Å or more |
| Size of crystalline in c-axis direction | Lc: 200 Å or more |
| True density | 2.00∼2.25 g/cm³ |

As the positive active material for use in the cathode composite, the following materials may be mentioned. There are I-group metallic compounds such as CuO, Cu₂O, Ag₂O, CuS and CuSO₄ etc.; IV-group metallic compounds such as TiS₂, SiO₂ and SnO etc., V-group metallic compounds such as V₂O₅, V₆O₁₂, VOₓ, Nb₂O₅, Bi₂O₃ and Sb₂O₃; VI-group metallic compounds such as CrO₃, Cr₂O₃, MoS₂, WO₃ and SeO₂,; VII-group metallic compounds such as MnO₂ and Mn₂O₃; VIII-group metallic compounds such as Fe₂O₃, FeO, Fe₃O₄, Ni₂O₃, NiO, CoS₂ and CoO; metallic compounds such as lithium-cobalt composite oxide and lithium-manganese composite oxide for example, expressed by general formulae LiₓMX₂ and LiₓMN_{y}X₂ (M and N are I-through VIII-group metals and X is chalcogens compound such as oxygen and sulfur; electro-conductive high-molecular compounds such as polypyrrole, polyaniline, polyparaphenylene, polyacetylene and polyacene group materials; and pseudo-graphite structural carbon material. However, the types of positive active material are not limited to these.

To provide the ion-conductive high-molecular compounds on surfaces of the cathode composite and the anode composite; it is preferable to apply the compound at a uniform thickness by means of, for example, a roller coating using an applicator roll, a doctor blade method, a spin coating or bar coater. However, the kind of installation method is not limited to these. By using these means, it become possible to apply the foregoing ion-conductive high-molecular compound on the surfaces of the cathode composite and the anode composite in a desired thickness and shape.

The same techniques are suitable for providing the cathode composite and the anode composite on the positive current collector plate and the negative current collector plate respectively. By these means, it becomes possible to increase practical surface areas of the electrode active material in contact with the electrolytes and current collector plates in the cathode composite and the anode composite. In these cases, carbon such as graphite, carbon black and acetylene black (having, properties quite different from those of the carbon used for the negative active material) and electro-conductive material such a metallic powder and electro-conductive metal oxide are mixed in the cathode composite and the anode composite as occasion demands, so that an electron conductivity may be improved. Further, in order to obtain an uniform mixed and dispersed system when manufacturing the cathode composite and the anode composite, various kinds of dispersants and dispersion mediums may be added. In addition a thickener, an extender and a tackifier may be added.

It is preferable to use aluminium, stainless steel, titanium or copper for the positive current collector plate and to use stainless steel, iron, nickel or copper for the negative current collector plate. However, the materials are not limited to these.

### Brief Description of the Drawings

Fig. 1 is a vertical sectional view showing a film type battery suitable for this invention.

Fig. 2 is a diagram showing discharge when substantial acrylic acid or methacrylic acid monomer remains in the high-molecular compound, characteristics at initial stage and discharge characteristics after long-term preservation for respective batteries of Embodiment 1 and Comparison Example 1. Fig. 3 is a diagram showing charge/discharge cycle characteristics after long-term preservation for respective batteries of Embodiment 2 and Comparison Example 2.

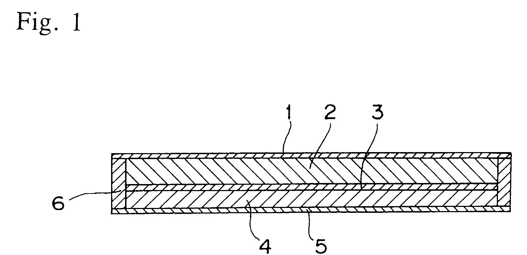

Fig. 1 is a vertical sectional view showing a film type battery structure suitable for this invention. In this figure, 1 is a positive current collector plate, 2 is a cathode composite, 3 is an electrolyte layer, 4 is an anode, 5 is a negative current collector plate and 6 is a sealing material comprising denatured polypropylene. The two collector plates 1, 5 serve also as an outer package.

The cathode composite 2 is composed of a positive active material, a conductive material, an ion-conductive high-molecular compound and a binder. The anode 4 is composed of a negative active material. The electrolyte layer 3 is composed of an ion-conductive high-molecular compound.

### Embodiment 1

This embodiment relates to a film type primary battery, with fundamental structure as shown in Fig. 1.

The battery of this embodiment was made up by the following processes (a) to (d).
(a); The cathode composite 2 was formed in the following manner. MnO₂ for the positive active material was mixed with acetylene black for the conductive material, at a weight ratio of 85 to 15 (mixture A₁₁). The mixture A₁₁ was mixed with a xylene solution (2 wt%) of copolymer of ethylene-propylene-1, 3-cyclohexadiene as binder, at a weight ratio of 2.2 to 2 under an atmosphere of dried inert gas (mixture B₁₁). 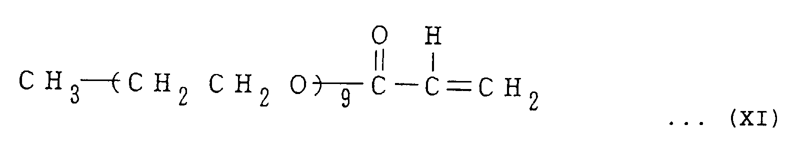 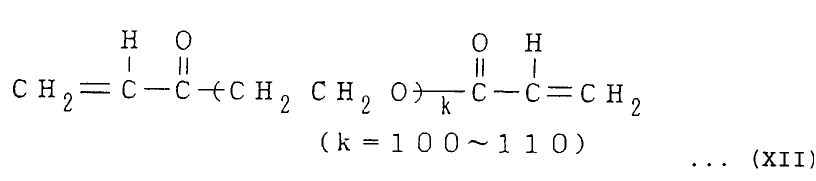 10 weight parts of a high-molecular mixture, prepared by mixing a high-molecular compound of formula (XI) with a high-molecular compound of formula (XII) at a weight ratio of 4 to 6, were mixed with 1 weight part of LiClO₄ and 20 weight parts of propylene carbonate (mixture C₁₁). The mixture B₁₁ was mixed with the mixture C₁₁ at a weight ratio of 10 to 3 under an atmosphere of dried inert gas (mixture D₁₁). This mixture D₁₁ was cast by means of screen coating onto the positive current collector plate 1, comprising stainless steel on a surface of which a conductive carbon film had been formed, and irradiated with an electron beam at an intensity of 8 Mrad under an atmosphere of dried inert gas so as to be cured. The film thickness of the cathode composite 2 formed on the positive current collector plate 1 was 60 µm.
(b); The electrolyte layer 3 was formed on the cathode composite 2 in the following manner. 30 weight parts of high-molecular mixture, the same as for process (a), were mixed with 6 weight parts of LiClO₄ and 64 weight parts of propylene carbonate (mixture E₁₁). This mixture E₁₁ was cast by means of screen coating onto the cathode composite 2 and irradiated with an electron beam at an intensity of 8 Mrad under an atmosphere of dried inert gas so as to cured. The thickness of the electrolyte layer 3 formed on the cathode composite 2 was 25 µm.
   For the processes (a) and (b), the high-molecular compounds of formulas (XI) and (XII) were prepared using esterification reaction, carried out using polyethylene glycol, acrylic acid, sulphuric acid as acid catalyst and compounds of formulae (XIII) and (XIV) below as radical scavenger in organic solvent. The prepared material was neutralized using alkali metal hydroxide and washed using aqueous NaCl. 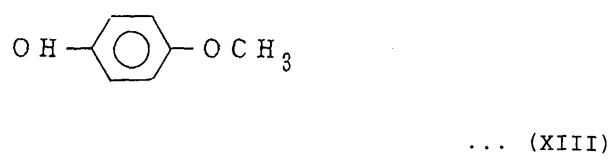 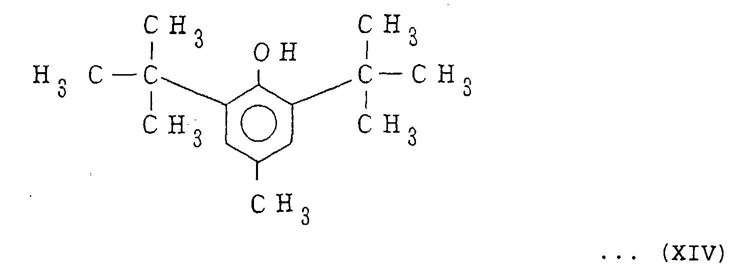
(c); The anode 4 was composed of lithium metal as negative active material, and formed by being press bonded to the stainless steel negative current collector plate 5.
(d); The laminate of the electrolyte layer 3, the cathode composite 2 and the positive current collector plate 1 prepared by the process (b) and the laminate of the anode 4 and the negative current collector plate 5 prepared by the process (c) were contacted with each other at the electrolyte layer 3 and the anode 4, and a battery of the structure shown in Fig. 1 prepared.

In this battery the contents of the compounds of formulae (XIII) and (XIV) were both 0.010 wt%. The quantities of the compounds of formulae (XIII) and (XIV) initially added were fixed in advance to set the eventual contents to this level.

The content of the compounds of formulae (XIII) and (XIV), the radical scavenger, was measured in the following manner. The battery was subjected to centrifugation process and extraction process at the time of manufacture of the battery. Thereafter, each of the mixture D₁₁ and the mixture E₁₁ was analysed quantitatively by means of e.g. colorimetric determination method or redox titration method. In the colorimetric determination method, for example, nitroso compound was measured quantitatively by adding sodium sulfite. The measured values thus obtained were converted to those for the "battery contents", taken as constituted by the cathode composite 2, the electrolyte layer 3, and the anode 4.

### Comparison Example 1

The battery of this comparison example is different from that of Embodiment 1 only in that no radical scavenger is used and the resulting battery contain no radical scavenger.

### Test 1

Discharge tests were done on the batteries of Embodiment 1 and Comparison Example 1 to examine their respective discharge characteristics at the initial stage, just after manufacture, and after long-term storage. Electrode surface area was set to 100 cm² for the test, although it varies depending on the manufacturing process. The discharge tests were done at 25°C with a load of 3kΩ. The long-term storage test was for 100 days at 60°C.

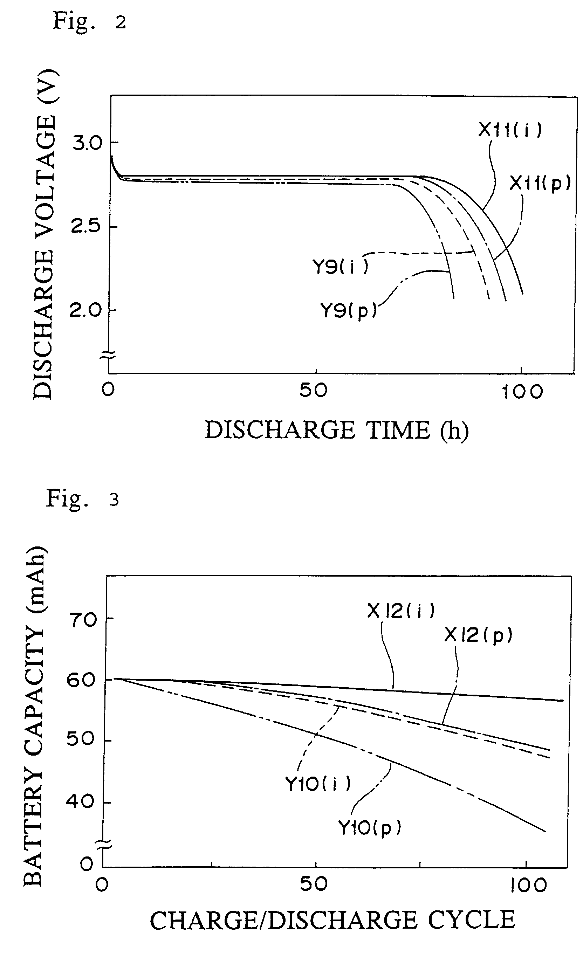

Fig. 2 shows these various discharge characteristics. In the figure, X11(i) indicates the initial discharge characteristic for the battery of Embodiment 1, X11(p) indicates the discharge characteristic after long-term preservation for the battery of Embodiment 1, Y9(i) indicates the initial discharge characteristic for the battery of Comparison Example 1 and Y9(p) indicates the discharge characteristic after long-term preservation for the battery of Comparison Example 1. The abscissa represents discharge time in hours and the ordinate is discharge voltage (V).

As obvious from Fig. 2, the battery of Embodiment 1 is excellent both in the discharge characteristic at initial stage and the discharge characteristic after long-term preservation, as compared with the battery of Comparison Example 1.

Further, each of 40 cells according to each of Embodiment 1 and Comparison Example 1 was examined to check the fraction defective at the time of manufacture of the battery. The number of defectives was zero for the batteries of Embodiment 1, but eight for the batteries of Comparison Example 1. This may be attributable to a fact that, in the battery of Comparison Example 1, before the thin film comprising the ion-conductive high-molecular compound was formed the high-molecular compounds of formulae (XI) and (XII) had naturally polymerized, leading to a thin film weak in the mechanical strength so that fine short-circuiting occurred easily.

Furthermore the relation between the rise in internal impedance of the battery after preservation for 100 days at 60°C and the content of radical scavenger was examined. When the content of radical scavenger was 0.1 wt% or less, the rising rate was extremely small.

### Embodiment 2

This embodiment relates to a film type secondary battery. The structure of the battery is as shown in Fig. 1, but this time 4 is an anode composite.

The battery was made up by the following process (a) to (e).
(a) The cathode composite 2 was formed in the following manner. LiCoO₂ forming the positive active material was mixed with acetylene black for the conductive material, at a weight ratio of 85 to 15 (mixture A₁₂). The mixture A₁₂ was mixed with a dimethylformamide solution (2 wt%) of polyacrylonitrile as binder, at a weight ratio of 2.4 to 2 under an atmosphere of dried inert gas (mixture B₁₂).
   10 weight parts of a high-molecular mixture prepared by mixing the high-molecular compounds of formula (XI) with the high-molecular compound formula (XII) at a weight ratio of 3.5 to 6.5, were mixed with 0.02 weight part of principal-chain straight-chain polyethylene oxide, 1 weight part of LiBF₄, 10 weight parts of 1,2-dimethoxyethane and 10 weight parts of γ-butyrolactone (mixture C₁₂). The mixture B₁₂ was mixed with the mixture C₁₂ at a weight ratio of 10 to 3 under an atmosphere of dried inert gas (mixture D₁₂). This mixture D₁₂ was cast by means of screen coating onto the positive current collector plate 1, comprising aluminium on a surface of which a conductive carbon film had been formed, and irradiated with an electron beam at an intensity of 12 Mrad under an atmosphere of dried inert gas so as to be cured. The film thickness of the cathode composite 2 formed on the positive current collector plate 1 was 60 µm.
(b) The electrolyte layer 3 was formed on the cathode composite 2 in the following manner. 30 weight parts of high-molecular mixture, the same as for process (a), were mixed with 0.06 weight part of principal-chain straight-chain polyethylene oxide, 6 weight parts of LiBF₄, 32 weight parts of 1,2-dimethoxyethane and 32 weight parts of γ-butyrolactone (mixture E₁₂). This mixture E₁₂ was cast by means of screen coating onto the cathode composite 2 under an atmosphere of dried inert gas and irradiated with an electron beam at an intensity of 8 Mrad under the atmosphere of dried inert gas so as to be cured. The film thickness of the electrolyte layer 3 formed on the cathode composite 2 was 25 µm.
(c) The anode composite 4 was formed in the following manner. Carbon powder as negative active material was mixed with a toluene solution (2 wt%) of copolymer of ethylene-propylene-cyclopentadiene as a binder, at a weight ratio of 2 to 5 under an atmosphere of dried inert gas (mixture F₁₂). 10 weight parts of high-molecular mixture, prepared by mixing the high-molecular compounds of formula (XI) with the high-molecular compound of formula (XII) at a weight ratio of 3.2 to 6.8, were mixed with 1 weight part of LiBF₄, 10 weight parts of 1,2-dimethoxyethane and 10 weight parts of γ-butyrolactone (mixture G₁₂). The mixture F₁₂ was mixed with the mixture G₁₂ at a weight ratio of 8 to 2 under an atmosphere of dried inert gas (mixture H₁₂). This mixture H₁₂ was cast by means of screen coating onto the negative current collector plate 5 comprising stainless steel, and irradiated with an electron beam at an intensity of 12 Mrad under the atmosphere of dried inert gas so as to be cured. The film thickness of the anode composite 4 formed on the negative current collector plate 5 was 30 µm.
(d) The electrolyte layer 3 was formed on the anode composite 4 in the following manner. 30 weight parts of high-molecular mixture, the same as for process (a), were mixed with 6 weight parts of LiBF₄, 32 weight parts of 1,2-dimethoxyethane and 32 weight parts of γ-butyrolactone (mixture I₁₂). This mixture I₁₂ was cast by means of screen coating onto the anode composite 4 under the atmosphere of dried inert gas, and irradiated with an electron beam at an intensity of 8 Mrad under the atmosphere of dried inert gas so as to be cured. The film thickness of the electrolyte layer 3 formed on the anode composite 4 was 25 µm.
   In the processes (a) to (d), the manufacturing method for the high-molecular compounds of formulas (XI) and (XII), and the contrivances made for the manufacture, were the same as in Embodiment 1. That is, esterification reaction was carried out using polyethylene glycol, acrylic acid, sulphuric acid as acid catalyst, the compounds of formulas (XIII) and (XIV) as radical scavenger and organic solvent. The prepared material was neutralized using alkali metal hydroxide and then washed using aqueous NaCl. Again, the quantity of the compounds of the formulae (XIII) and (XIV) to be added was fixed in advance.
(e) The laminate of the electrolyte layer 3, the cathode composite 2 and the positive current collector plate 1 prepared by the process (b) and the laminate of the electrolyte layer 3, the anode composite 4 and the negative current collector plate 5 prepared by the process (d) were contacted with each other at the respective electrolyte layers 3.

In this battery the contents of compounds of formulae (XIII) and (XIV) in the battery were both 0.010 wt%, because the quantity of compounds of formulae (XIII) and (XIV) initially added was fixed in advance.

The content of compounds of formulae (XIII) and (XIV), the radical scavenger, was measured in the same manner as in Embodiment I.

### Comparison Example 2

The battery of this comparison example is different from that of Embodiment 2 only in that no radical scavenger is used and the resulting battery contains no radical scavenger.

### Test 2

Charge/discharge cycle tests were done on the batteries of Embodiment 2 and Comparison Example 2 to examine their respective charge/discharge cycle characteristics at the initial stage and after long-term preservation. Electrode surface area varies depending on the manufacturing process, but it was set to 100 cm² for these tests.

Conditions for the charge/discharge cycle test were 25°C, a constant-current constant-voltage charge at 50 µA/cm², a constant current discharge at 50µA/cm², a charge end voltage of 4.1 V and a discharge end voltage of 2.7 V. The period for long-term storage was 100 days at 60°C.

Fig 3 shows charge/discharge cycle characteristics at initial stage and charge/discharge cycle characteristics after long-term storage. In the figure, X12(i) indicates a charge/discharge cycle characteristic at the initial stage for the battery of Embodiment 2, X12(p) indicates the charge/discharge cycle characteristic after long-term storage for the battery of Embodiment 2 Y10(i) indicates the charge/discharge cycle characteristic at the initial stage for the battery of Comparison Example 2, and Y10(p) indicates the charge/discharge cycle characteristic after long-term storage for the battery of Comparison Example 2. The abscissa represents a charge/discharge cycle number (number of times) and the ordinate represents the battery capacity (mAh).

As obvious from Fig 3, the battery of Embodiment 2 is excellent both in the charge/discharge cycle characteristic at the initial stage and the charge/discharge cycle characteristic after long-term preservation as compared with the battery of Comparison Example 2.

Further, each of 40 cells according to each of Embodiment 2 and Comparison Example 2 was examined to check the fraction defective after manufacture of the battery. The number of defectives was zero for the batteries of Embodiment 2 but eight for the batteries of Comparison Example 2. This may be attributable to a fact that, in the battery of Comparison Example 2, before the thin film comprising the ion-conductive high-molecular compound was formed the high-molecular compounds of formulae (XI) and (XII) had naturally polymerized, leading to a thin film weak in the mechanical strength so that fine short-circuiting occurred easily.

Furthermore the relation between the rise in internal impedance of the battery after preservation for 100 days at 60°C and the content of radical scavenger was examined. When the content of radical scavenger was about 0.1 wt% or less, the rising rate was extremely small.

## Claims

1. A method of making a battery containing a cathode composite (2) and an electrolyte (3), each comprising an ion-conductive high-molecular compound, and an anode (4) which may also be a composite comprising the ion-conductive high-molecular compound;
comprising the steps of
(a) preparing one or more high-molecular compounds selected from those of the following formulae (I) and (II), including at least one of formula (II): 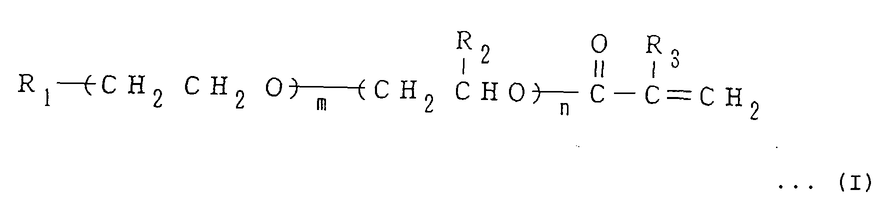 wherein R₁, R₂, R₃ are hydrogen or lower alkyl having a carbon number of 1 or more and m and n are integers according with m ≥ 1, n ≥ 0 and n/m is in the range 0 to 5; 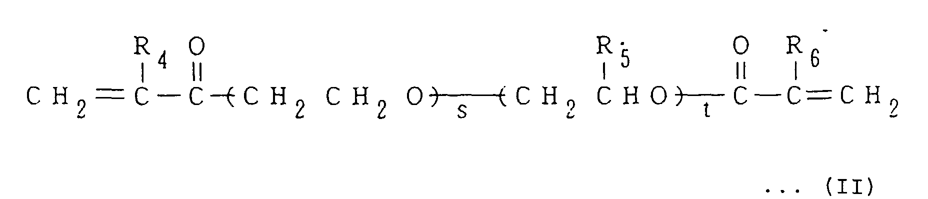 wherein R₄, R₅ and R₆ are hydrogen or lower alkyl having a carbon number of 1 or more and s and t are integers according with s ≥ 3, t ≥ 0, and t/s is in the range 0 to 5;
by esterifying the corresponding poly(alkylene) glycol with the appropriate acrylic acid in organic solvent in the presence of sulphuric acid or para-toluenesulphonic acid, the product being neutralised with alkali metal hydroxide and then washed using aqueous alkali metal chloride; and
(b) polymerising the one or more high molecular compounds to form a crosslinked network in the presence of at least one ionic compound for conferring conduction;
characterised in that a radical scavenger to inhibit premature reaction, selected from compounds of formulae (III), (IV), (V) and (VI) below, is present at step (a) above:

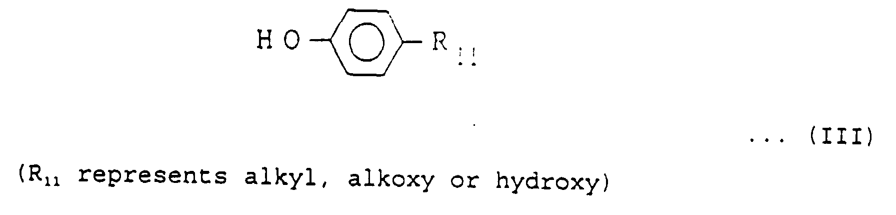

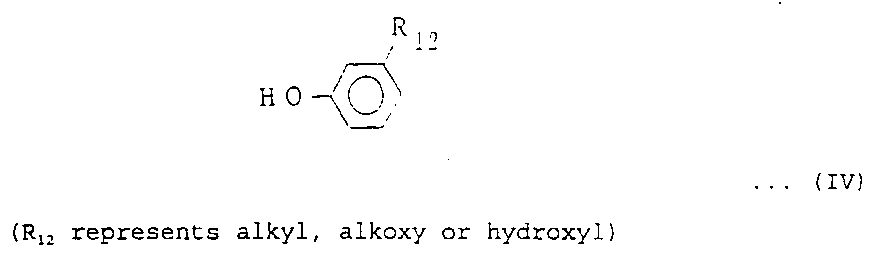

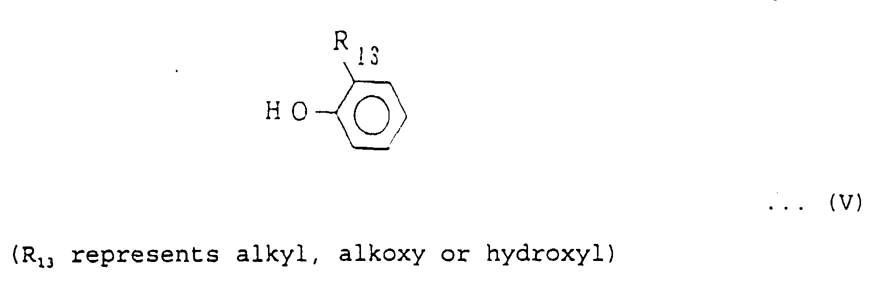

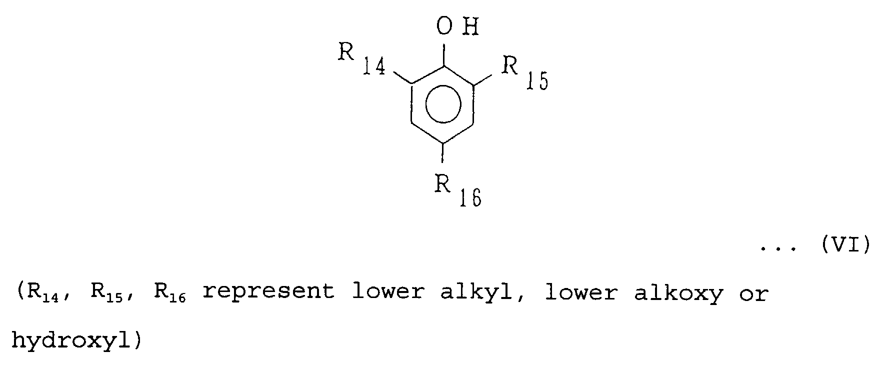

2. A method according to claim 1 in which mono(meth)acrylate of polyethylene glycol and di(meth)acrylate of polyethylene glycol are said high-molecular compounds polymerised to form the crosslinked network.

3. A method according to claim 1 or claim 2 in which the quantity of radical scavenger is controlled such that not more than 0.1 wt% thereof is present in the battery based on the weight of the anode, cathode composite and electrolyte.

4. A method according to any one of the preceding claims in which the ionic compound for conferring conduction is selected from inorganic and organic ionic salts of Li, Na and K and quaternary ammonium salts.

5. A method according to claim 4 in which the ionic compound is selected from LiClO₄, LiBF₄, LiAsF₆, LiPF₆, LiI, LiBr, Li₂B₁₀Cl₁₀, LiCF₃SO₃, LiCF₃CO₂, LiSCN, NaI, NaSCN, NaBr, NaClO₄, KClO₄, KSCN,(CH₃)₄NBF₄, (CH₃)₄NBr, (C₂H₅)₄NClO₄, (C₂H₅)₄NI, (C₃H₇)₄NBr, (n-C₄H₉)₄NClO₄, (n-C₄H₉)₄NI, (C₂H₅)₄N-maleate, (C₂H₅)₄N-benzoate, (C₂H₅)₄N-phthalate, lithium stearyl sulphonate, sodium octyl sulphonate and lithium dodecylbenzene sulphonate.

6. A method according to any one of the preceding claims in which a high-molecular-weight polymer of ethylene oxide or high-molecular-weight random copolymer of ethylene oxide-propylene oxide is included as binder in at least one of the cathode composite (2) and, where present, the anode composite (4).

7. A method according to any one of the preceding claims in which negative active material for the anode (4) is selected from carbon, lithium and lithium alloys.

8. A method according to any one of the preceding claims in which the battery is formed as a film-type battery.

## Patentansprüche

1. Verfahren zur Herstellung einer Batterie, die einen Kathodenverbundstoff (2) und einen Elektrolyten (3), die jeweils eine ionenleitende hochmolekulare Verbindung umfassen, sowie eine Anode (4), die ebenfalls ein Verbundstoff sein kann, der die ionenleitende hochmolekulare Verbindung umfaßt, enthält;
umfassend die Schritte
(a) Herstellen einer oder mehrerer hochmolekularer Verbindungen, die aus solchen der folgenden Formeln (I) und (II) ausgewählt sind und wenigstens eine der Formel (II) umfassen: 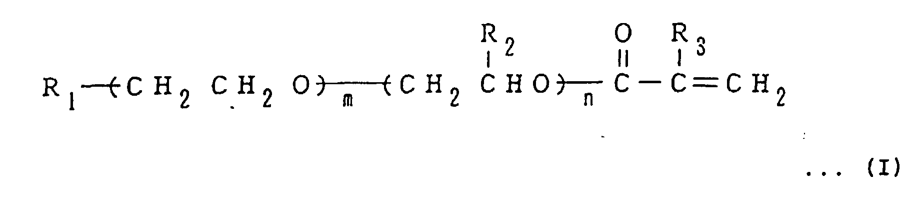 wobei R₁, R₂ und R₃ Wasserstoff oder Niederalkyl mit einer Kohlenstoffzahl von 1 oder mehr sind und m und n ganze Zahlen sind, wobei m ≥ 1, n ≥ 0 und n/m im Bereich von 0 bis 5 liegt; 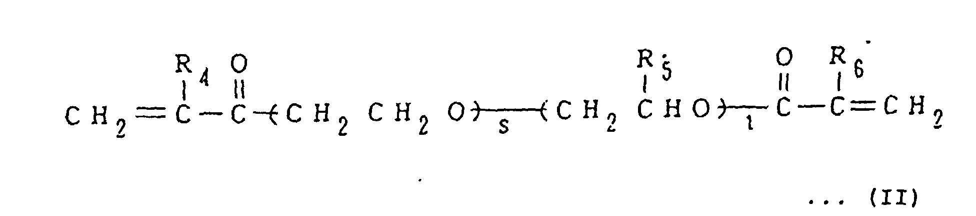 wobei R₄, R₅ und R₆ Wasserstoff oder Niederalkyl mit einer Kohlenstoffzahl von 1 oder mehr sind und s und t ganze Zahlen sind, wobei s ≥ 3, t ≥ 0 und t/s im Bereich von 0 bis 5 liegt;
durch Veresterung des entsprechenden (Poly)alkylenglycols mit der entsprechenden Acrylsäure in einem organischen Lösungsmittel in Gegenwart von Schwefelsäure oder para-Toluolsulfonsäure, wobei das Produkt mit Alkalimetallhydroxid neutralisiert und dann mit wäßrigem Alkalimetallchlorid gewaschen wird; und
(b) Polymerisieren der einen oder der mehreren hochmolekularen Verbindungen unter Bildung eines vernetzten Netzwerks in Gegenwart von wenigstens einer ionischen Verbindung für die Leitfähigkeit;
dadurch gekennzeichnet, daß im obigen Schritt (a) ein Radikalfänger zum Hemmen einer vorzeitigen Reaktion vorhanden ist, der aus Verbindungen der folgenden Formeln (III), (IV), (V) und (VI) ausgewählt ist:

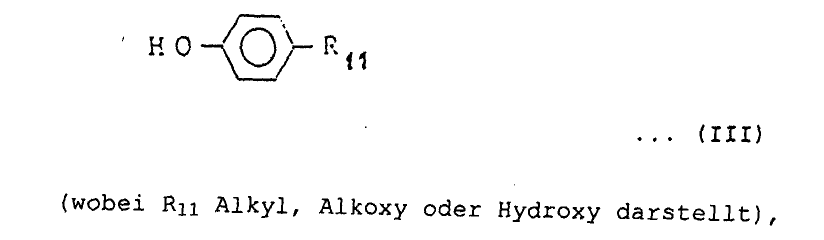

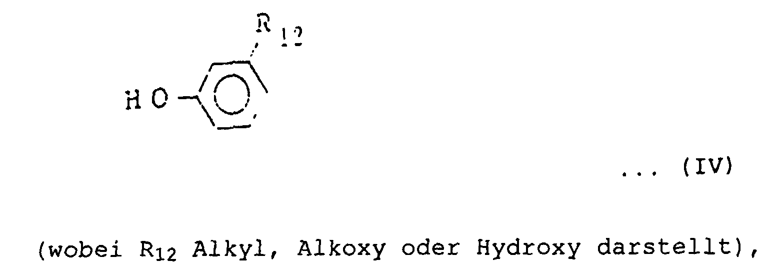

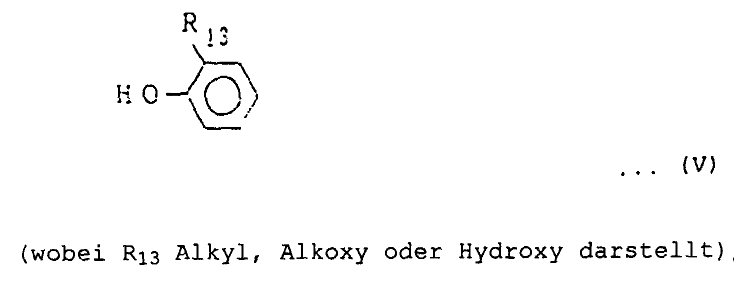

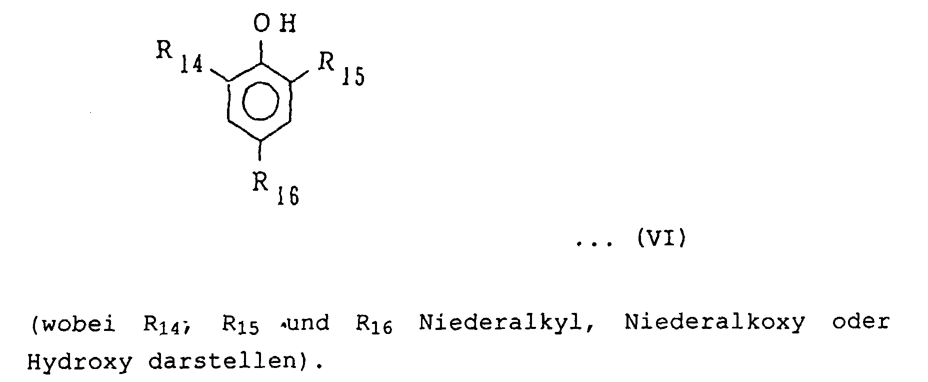

2. Verfahren gemäß Anspruch 1, wobei es sich bei den hochmolekularen Verbindungen, die unter Bildung des vernetzten Netzwerks polymerisiert werden, um das Mono(meth)acrylat von Polyethylenglycol und das Di(meth)acrylat von Polyethylenglycol handelt.

3. Verfahren gemäß Anspruch 1 oder 2, wobei die Menge des Radikalfängers so gesteuert wird, daß nicht mehr als 0,1 Gew.-% davon in der Batterie vorhanden sind, bezogen auf das Gewicht der Anode, des Kathodenverbundstoffs und des Elektrolyten.

4. Verfahren gemäß einem der vorstehenden Ansprüche, wobei die ionische Verbindung für die Leitfähigkeit aus anorganischen und organischen Ionensalzen von Li, Na und K sowie quartären Ammoniumsalzen ausgewählt ist.

5. Verfahren gemäß Anspruch 4, wobei die ionische Verbindung aus LiClO₄, LiBF₄, LiAsF₆, LiPF₆, LiI, LiBr, Li₂B₁₀Cl₁₀, LiCF₃SO₃, LiCF₃CO₂, LiSCN, NaI, NaSCN, NaBr, NaClO₄, KClO₄, KSCN, (CH₃)₄NBF₄, (CH₃)₄NBr, (C₂H₅)₄NClO₄, (C₂H₅)₄NI, (C₃H₇)₄NBr, (n-C₄H₉)₄NClO₄, (n-C₄H₉)₄NI, (C₂H₅)₄N-maleat, (C₂H₅)₄N-benzoat, (C₂H₅)₄N-phthalat, Lithiumstearylsulfonat, Natriumoctylsulfonat und Lithiumdodecylbenzolsulfonat ausgewählt ist.

6. Verfahren gemäß einem der vorstehenden Ansprüche, wobei ein Polymer von Ethylenoxid mit hohem Molekulargewicht oder ein statistisches Copolymer von Ethylenoxid/Propylenoxid mit hohem Molekulargewicht als Bindemittel in wenigstens dem Kathodenverbundstoff (2) sowie, falls vorhanden, dem Anodenverbundstoff (4) vorhanden ist.

7. Verfahren gemäß einem der vorstehenden Ansprüche, wobei das negative aktive Material für die Anode (4) aus Kohlenstoff, Lithium und Lithiumlegierungen ausgewählt ist.

8. Verfahren gemäß einem der vorstehenden Ansprüche, wobei die Batterie als Batterie des Filmtyps ausgebildet ist.

## Revendications

1. Procédé de fabrication d'un accumulateur ou pile contenant un composite de cathode (2) et un électrolyte (3), chacun comprenant un composé conducteur ionique de haut poids moléculaire, et une anode (4) qui peut également être un composite comprenant le composé conducteur ionique de haut poids moléculaire ;
comprenant les étapes de
(a) préparation d'un ou plusieurs composés de haut poids moléculaire choisis parmi ceux des formules (I) et (II) suivantes, incluant au moins un composé de formule (II) : 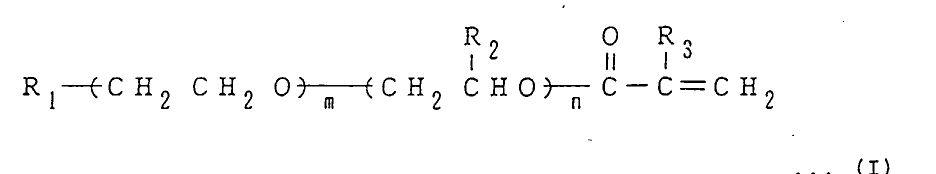 où R₁, R₂, R₃ sont chacun l'hydrogène ou un groupe alkyle inférieur ayant un ou plusieurs atomes de carbone, et m et n sont des nombres entiers tels que m ≥ 1, n > 0 et n/m se situe dans l'intervalle de 0 à 5 ; 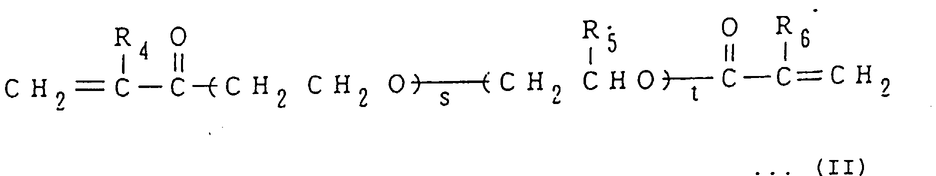 où R₄, R₅ et R₆ sont chacun l'hydrogène ou un groupe alkyle inférieur ayant un ou plusieurs atomes de carbone, et s et t sont des nombres entiers tels que s ≥ 3, t ≥ 0, et t/s se situe dans l'intervalle de 0 à 5 ;
par estérification du (poly)alkylène-glycol correspondant avec l'acide acrylique approprié dans un solvant organique en présence d'acide sulfurique ou d'acide para-toluènesulfonique, le produit étant neutralisé avec un hydroxyde de métal alcalin, puis lavé en utilisant une solution aqueuse de chlorure de métal alcalin ; et
(b) polymérisation du ou des composés de haut poids moléculaire pour former un réseau réticulé en présence d'au moins un composé ionique pour conférer de la conductivité ;
caractérisé en ce qu'un fixateur de radicaux servant à inhiber une réaction prématurée, choisi parmi les composés des formules (III), (IV), (V) et (VI) ci-dessous, est présent dans l'étape (a) ci-dessus :

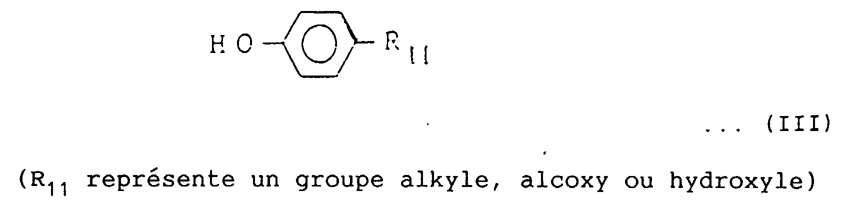

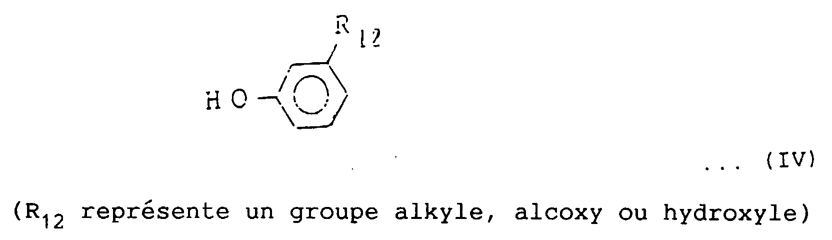

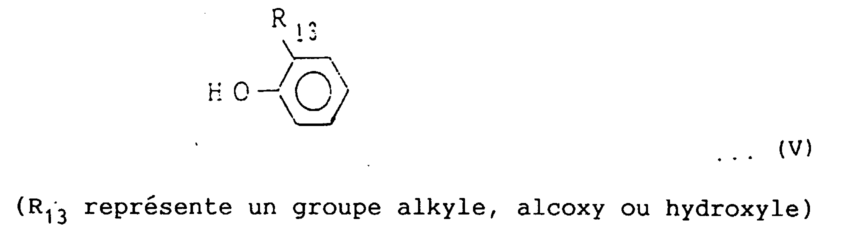

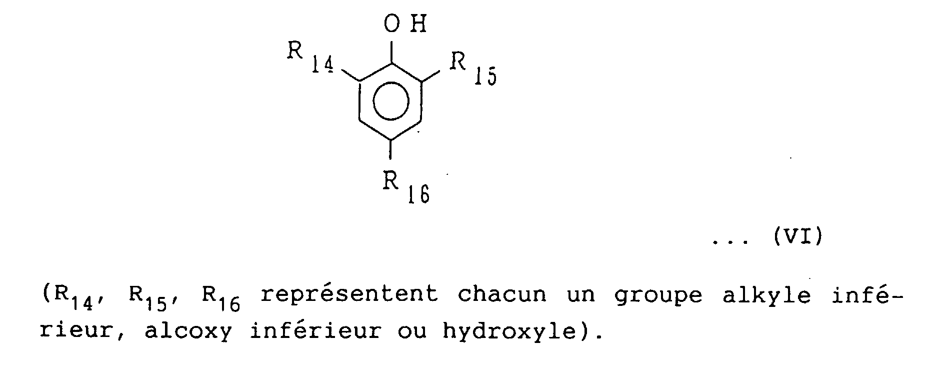

2. Procédé selon la revendication 1, dans lequel lesdits composés de haut poids moléculaire polymérisés pour former le réseau réticulé sont un mono(méth)acrylate de polyéthylène-glycol et un di(méth)acrylate de polyéthylène-glycol.

3. Procédé selon la revendication 1 ou la revendication 2, dans lequel la quantité de fixateur de radicaux est réglée de telle manière qu'il n'y en ait pas plus de 0,1 % en poids dans l'accumulateur ou la pile par rapport au poids de l'anode, du composite de cathode et de l'électrolyte.

4. Procédé selon l'une quelconque des revendications précédentes, dans lequel le composé ionique servant à conférer la conductivité est choisi parmi les sels ioniques organiques et minéraux de Li, Na et K et les sels d'ammonium quaternaire.

5. Procédé selon la revendication 4, dans lequel le composé ionique est choisi parmi LiClO₄, LiBF₄, LiAsF₆, LiPF₆, LiI, LiBr, Li₂B₁₀Cl₁₀, LiCF₃SO₃, LiCF₃CO₂, LiSCN, NaI, NaSCN, NaBr, NaClO₄, KClO₄, KSCN, (CH₃)₄NBF₄, (CH₃)₄NBr, (C₂H₅)₄NClO₄, (C₂H₅)₄NI, (C₃H₇)₄NBr, (*n*-C₄H₉)₄NClO₄, (*n*-C₄H₉)₄NI, (C₂H₅)₄N-maléate, (C₂H₅)₄N-benzoate, (C₂H₅)₄N-phtalate, le stéarylsulfonate de lithium, l'octylsulfonate de sodium et le dodécylbenzènesulfonate de lithium.

6. Procédé selon l'une quelconque des revendications précédentes, dans lequel un polymère d'oxyde d'éthylène de haut poids moléculaire ou un copolymère oxyde d'éthylèneoxyde de propylène statistique de haut poids moléculaire est inclus comme liant dans au moins l'un du composite de cathode (2) et, s'il est présent, du composite d'anode (4).

7. Procédé selon l'une quelconque des revendications précédentes, dans lequel la matière active négative pour l'anode (4) est choisie parmi le carbone, le lithium et les alliages de lithium.

8. Procédé selon l'une quelconque des revendications précédentes, dans lequel l'accumulateur ou pile est réalisé sous forme d'un accumulateur ou pile du type en film.
